# EUROPÄISCHE PATENTSCHRIFT

(11) **EP 1 086 154 B1**
(45) Veröffentlichungstag und Bekanntmachung des Hinweises auf die Patenterteilung: **20.11.2002**
(21) Anmeldenummer: 99924953.5
(22) Anmeldetag: 12.05.1999
(51) Int. Cl.: C08F 10/00, C07F 17/00, C08F 4/76, C08F 4/64, C08F 12/00

(54) **VERFAHREN ZUR HERSTELLUNG GETRÄGERTER KATALYSATOREN**
METHOD FOR PRODUCING CARRIER-BORNE CATALYSTS
PROCEDE DE PRODUCTION DE CATALYSEURS A SUPPORT

(30) Priorität: 15.05.1998 DE 19821949
(43) Veröffentlichungstag der Anmeldung: 28.03.2001
(73) Patentinhaber: Basell Polyolefine GmbH, 77694 Kehl (DE); Max-Planck-Gesellschaft zur Förderung der Wissenschaften e.V., 80539 München (DE)
(72) Erfinder: STORK, Martin, D-59075 Hamm (DE); MÜLLEN, Klaus, D-50939 Köln (DE); KLAPPER, Markus, D-55128 Mainz (DE); KOCH, Matthias, D-65205 Wiesbaden (DE); GREGORIUS, Heike, D-56288 Bubach (DE); RIEF, Ursula, D-68542 Heddesheim (DE); KRISTEN, Marc, Oliver, D-67117 Limburgerhof (DE)
(86) Internationale Anmeldenummer: EP9903270
(87) Internationale Veröffentlichungsnummer: WO99060035

(56) Entgegenhaltungen:
- EP-A- 0 821 009

## Beschreibung

Die vorliegende Erfindung betrifft ein Verfahren zur Herstellung eines geträgerten Katalysators. Weiterhin betrifft die Erfindung geträgerte Metallocenkatalysatoren, die nach diesem Verfahren erhältlich sind, ein neues Copolymerisat als Trägermaterial für Metallocenkatalysatoren sowie ein Verfahren zur Polymerisation von Olefinen in Gegenwart eines erfindungsgemäßen Katalysators.

Geträgerte Übergangsmetallkatalysatoren sind seit langem bekannt und werden beispielsweise zur Olefinpolymerisation eingesetzt. Die Aktivität und Produktivität dieser Katalysatoren hängt dabei wesentlich von ihrem Herstellverfahren ab. Als Trägermaterial für solche Übergangsmetallkatalysatoren werden üblicherweise vernetzte Polymere oder anorganische Trägermaterialien, wie beispielsweise Kieselgel eingesetzt. Beispiele solcher geträgerten Katalysatoren werden beispielsweise in WO 94/28034, in EP-A1-295 312 sowie in WO 98/01481 beschrieben.

Bei der Fixierung von Metallocenen auf der Oberfläche anorganischer Materialien und der anschließenden Polymerisation können jedoch einige nachteilige Effekte auftreten. So ist es schwierig, die Katalysatorkomponente homogen auf der Oberfläche des porösen Trägermaterials zu verteilen. Im Verlauf der Polymerisation kommt es im allgemeinen zu einer Fragmentierung des Katalysators und des Trägermaterials. Aufgrund der inhomogenen Verteilung der Katalysatorkomponenten auf der Oberfläche des Trägers entstehen bei der Fragmentierung wiederum inhomogene Katalysatorpartikel, die einen nachteiligen Einfluß auf die Polymerisationsprodukte haben können.

Der vorliegenden Erfindung lag daher die Aufgabe zugrunde, ein Verfahren zur Herstellung eines geträgerten Katalysators zu finden, welches die Nachteile des Standes der Technik nicht mehr aufweist und eine homogene Verteilung der Katalysatorkomponenten auf dem Trägermaterial ermöglicht.

Demgemäß wurde ein Verfahren zur Herstellung eines geträgerten Katalysators gefunden, welches dadurch gekennzeichnet ist, daß es folgende Verfahrensschritte umfaßt:
(1) Herstellung eines Copolymerisats enthaltend mindestens folgende Monomereinheiten I und II 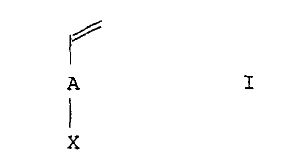 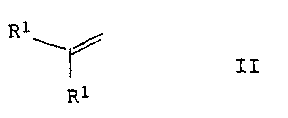 wobei die Variablen die folgende Bedeutung haben:
   - A: eine direkte chemische Bindung oder eine Gruppe 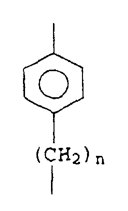
   - X: eine substituierbare Abgangsgruppe,
   - R¹: gleiche oder verschiedene der folgenden Reste: Wasserstoff, substituiertes oder unsubstituiertes Aryl oder verzweigtes oder unverzweigtes Alkyl oder Alkenyl und
   - n: eine ganze Zahl von 0 bis 8;
(2) polymeranaloge Umsetzung des nach (1) erhaltenen Copolymerisats mit einer Cyclopentadienylverbindung III oder einer Fulvenverbindung IIIa 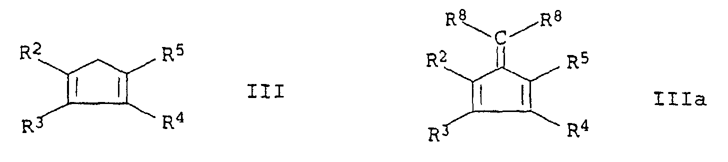 zu einem entsprechenden Copolymerisat, bei welchem mindestens ein Teil der Abgangsgruppen X durch Reste III' oder III'a 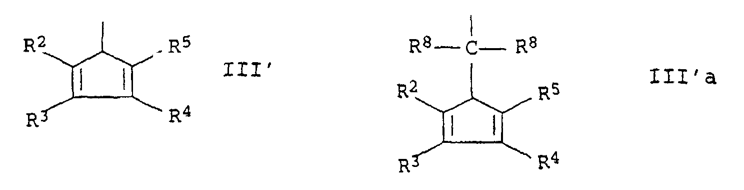 ersetzt sind, wobei die Variablen unabhängig voneinander die folgende Bedeutung haben:
   - R²,R³,R⁴,R⁵: Wasserstoff, C₁-C₁₀-Alkyl, substituiertes oder unsubstituiertes Phenyl oder einer dieser Reste eine Gruppe
   -QR⁶R⁷X², in welcher
   - Q: Kohlenstoff, CR⁶R⁷C, Germanium oder Silicium,
   - R⁶,R⁷: unabhängig voneinander Wasserstoff, Methyl, Ethyl oder Phenyl, und
   - X²: Halogen, Methyl, Methoxy oder Ethoxy bedeuten; und
   - R⁸: gleiche oder verschiedene der Reste C₁- bis C₄-Alkyl oder substituiertes oder unsubstituiertes Phenyl sind, und
(3) Umsetzung des nach (2) erhaltenen modifizierten Copolymerisats mit einer Verbindung IV oder IVa

   CpM(X³)₃ IV

   M(X³)₄ IVa IVa

   in welcher die Variablen die folgende Bedeutung haben:
   - Cp: ein substituierter oder unsubstituierter Cyclopentadienylrest,
   - M: Ti, Zr oder Hf und
   - X³: Halogen, Wasserstoff, C₁- bis C₁₀-Alkyl, C₁- bis C₁₀-Alkoxy oder Amido, wobei verschiedene Substituenten X³ unterschiedliche Bedeutung haben können.

Weiterhin wurde ein geträgerter Metallocenkatalysator gefunden, der nach diesem Verfahren erhältlich ist, ein Copolymerisat erhältlich nach den Verfahrensschritten 1 und 2 des erfindungsgemäßen Verfahrens als Trägermaterial für Metallocenkatalysatoren, sowie ein Verfahren zur Polymerisation von Olefinen in Gegenwart des erfindungsgemäßen Katalysators.

Im Verfahrensschritt 1 des erfindungsgemäßen Verfahrens wird zunächst ein copolymerisat hergestellt, welches als Ausgangsmaterial für den Katalysatorträger dient. Dieses Copolymerisat enthält mindestens die Monomereneinheiten I und II. Von diesen Monomereinheiten dient die Monomereinheit II als Grundgerüst des Trägermaterials. Die Monomereinheit I hat dagegen die Funktion, eine substituierbare Abgangsgruppe in das Copolymerisat einzubringen, welches anschließend durch polymeranaloge Umsetzung mit einer Cyclopentadienylverbindung oder eine Fulvenverbindung modifiziert werden kann. Neben den Comonomeren I und II können beliebige andere olefinische Comonomere bei der Copolymerisation nach Schritt (1) eingesetzt werden, vorausgesetzt, sie interferieren nicht in störender Weise mit den Umsetzungen nach den Schritten (2) und (3). Zu nennen sind beispielsweise Acrylsäure- oder Methacrylsäureester oder -nitrile. Durch diese weiteren Comonomere kann z.B. die Polarität der copolymeren Träger in gewünschter Weise modifiziert werden.

Die Variable A in der Formel I kann eine direkte chemische Bindung sein, vorzugsweise ist A jedoch eine p-Benzylengruppe oder p-Phenylengruppe.

Als substituierbare Abgangsgruppe X kommen beispielsweise nucleophil substituierbare Abgangsgruppen wie die Halogene, also Fluor, Chlor, Brom oder Jod oder weitere dem Fachmann geläufige nucleophil substituierbare Abgangsgruppen, beispielsweise Tosylat, Trifluoracetat, Acetat oder Azid in Betracht. Eine bei Einsatz von nucleophil substituierbaren Abgangsgruppen X bevorzugte Monomereinheit I ist p-(Chlormethyl)styrol.

Die substituierbare Abgangsgruppe X kann auch eine metallorganische funktionelle Gruppe wie Li oder MgX⁴ sein, wobei X⁴ für Halogen, also Fluor, Chlor, Brom oder Jod steht. In der Regel erfolgt die Herstellung der metallorganische funktionelle Gruppen enthaltende Copolymerisate nicht durch Polymerisation der entsprechenden Monomere I und II, sondern durch Polymerisation von Comonomeren II und geeigneten Comonomeren I', die durch polymeranaloge Umsetzung in die entsprechenden Monomereinheiten I überführt werden können. Geeignete Monomere I' sind beispielsweise p-Halogen-Styrole, von denen p-Bromstyrol besonders bevorzugt ist.

Von den Resten R¹ in Formel II ist vorzugsweise mindestens ein Rest ein substituiertes oder unsubstituiertes Phenyl, Pyrenyl, Naphthyl oder Alkenyl. Bevorzugte Monomere II sind Styrol, Butadien oder Isopren.

Zur Herstellung des Copolymerisates nach Verfahrensschritt I können mehrere verschiedene Comonomere I oder I' und mehrere verschiedene Comonomere II eingesetzt werden. Gute Ergebnisse werden jedoch auch erzielt, indem lediglich eine Verbindung I oder I' mit einer Verbindung II copolymerisiert werden. Die Mengenverhältnisse der Comonomeren I oder I' und II können dabei in einem breiten Bereich variieren. Üblicherweise wird ein größerer Anteil des Comonomeren II eingesetzt.

Der Anteil des Comonomeren I an der Gesamtmenge des Copolymerisats beträgt vorteilhafterweise 3 bis 30 Gew.-%, bezogen auf die Gesamtmasse des Copolymerisats, besonders bevorzugt 5 bis 20 Gew.-% und insbesondere 7 bis 15 Gew.-%.

Im Verfahrensschritt 2 des erfindungsgemäßen Verfahrens wird das nach Verfahrensschritt 1 erhaltene Copolymerisat in polymeranaloger Weise mit einer Cyclopentadienylverbindung III oder einer Fulvenverbindung IIIa umgesetzt.

Als Cyclopentadienylverbindung III können außer unsubstituiertem Cyclopentadien auch 1- bis 4-fach substituierte Cyclopentadiene eingesetzt werden. Als Substituenten R² bis R⁵ kommen insbesondere C₁- bis C₁₀-Alkylgruppen in Betracht, also Methyl, Ethyl sowie die verschiedenen Isomere von Propyl, Butyl, Pentyl, Hexyl, Heptyl, Octyl, Nonyl oder Decyl. Weiterhin kommen als Reste R² bis R⁵ auch substituierte oder unsubstituierte Phenylreste in Betracht, darunter insbesondere unsubstituierte Phenylreste. Weiterhin kann einer der Reste R² bis R⁵ auch eine Gruppe -QR⁶R⁷X² sein, in der die Variable Q insbesondere Silicium, die Variablen R⁶ und R⁷ insbesondere Methyl und die Gruppe X² Halogen, Methyl, Methoxy oder Ethoxy bedeuten. Besonders bevorzugt ist eine Gruppe -QR⁶R⁷X² der Formel -Si(CH₃)₂X². Eine solche Gruppe läßt sich zum Aufbau einer verbrückten Metallocenstruktur auf dem Copolymergrundgerüst nutzen. Die bevorzugte Cyclopentadienylverbindung III zur Verwendung im Verfahrensschritt 2 ist jedoch unsubstituiertes Cyclopentadien.

Geeignete Fulvenverbindungen IIIa sind außer am 5-Ring unsubstituierte auch 1- bis 4-fach am 5-Ring substituierte Fulvenverbindungen, wobei die gleichen Reste wie bei den Cyclopentadienylverbindungen III in Betracht kommen. Bevorzugte Fulvene IIIa sind am 5-Ring unsubstituiert. Die Fulvene IIIa sind am Methylen-Kohlenstoff zweifach durch Reste R⁸ substituiert, wobei insbesondere Methyl, Ethyl oder die verschiedenen Isomere von Propyl oder Phenyl in Betracht kommen. Ein besonders bevorzugtes Fulven IIIa ist Dimethylfulven.

Die polymeranaloge Umsetzung nach Verfahrensschritt 2 kann nach verschiedenen, dem Fachmann geläufigen Verfahren durchgeführt werden.

Wenn die substiutierbare Abgangsgruppe X eine nucleophil substituierbare Abgangsgruppe ist, erfolgt die polymeranaloge Umsetzung des Verfahrensschritts 2 in der Regel mit einer Cyclopentadienylverbindung III. Im allgemeinen wird dann die Cyclopentadienverbindung durch eine starke Base wie Butyllithium oder durch elementares Alkalimetall, wie beispielsweise Natrium, in das Cyclopentadienylanion überführt. Dieses Cyclopentadienylanion kann dann in einer nucleophilen Substitutionsreaktion eine geeignete nucleophil substituierbare Abgangsgruppe X an der Comonomereinheit I substituieren.

Wenn die Abgangsgruppe X eine metallorganische funktionelle Gruppe ist, erfolgt die Umsetzung des Verfahrensschritts 2 üblicherweise mit einer Fulvenverbindung IIIa. Hierbei entstehen in einer polymeranalogen Reaktion dann Copolymerisate, die Reste III'a aufweisen.

Im anschließenden Verfahrensschritt 3 wird das nach Verfahrensschritt 2 erhaltene modifizierte Copolymerisat mit einer Verbindung IV oder IVa umgesetzt.

Als Verbindung IV kommen alle bekannten Monocyclopentadienylverbindungen in Betracht. Das Zentralatom M kann dabei Titan, Zirkonium oder Hafnium sein, wobei Zirkonium besonders bevorzugt wird. Als Cyclopentadienylrest kommen dabei alle substituierten oder unsubstituierten Cyclopentadienylreste in Betracht, also neben unsubstituiertem Cyclopentadienyl auch ein- oder mehrfach mit C₁bis C₁₀-Alkylgruppen substituierte Cyclopentadienylreste, darunter besonders mit Methyl, Ethyl, Propyl oder Butyl substituierte Cyclopentadienylreste aber auch kompliziertere Ringsysteme, die einen Cyclopentadienylring enthalten. Als besonders bevorzugte Cyclopentadienylreste IV sind Mono- oder Dialkylcyclopentadienyl oder substituiertes oder unsubstituiertes Fluorenyl, Indenyl oder Tetrahydroindenyl zu nennen. Weiterhin sind Cyclopentadienylreste zu nennen, die mit der Chlordimethylsilylgruppe modifiziert sind. Metallocenkomplexe mit einer solchen Cyclopentadienylstruktur lassen sich zur Herstellung verbrückter geträgerter Metallocene nutzen.

Im Verfahrensschritt 3 können auch Verbindungen IVa zum Einsatz kommen. Als Zentralatom M dieser Verbindungen M(X³)₄ kommen Titan, Zirkonium oder Hafnium in Betracht, wobei Titan besonders bevorzugt ist.

Die Gruppen X³ in Formel IV oder IVa bedeuten vorzugsweise Halogen, insbesondere Chlor. X³ kann jedoch auch Wasserstoff, C₁- bis C₁₀-Alkyl, C₁- bis C₁₀-Alkoxy oder Amido, insbesondere Methyl bedeuten.

Bevorzugte Verbindungen IV sind Cyclopentadienylzirkoniumtrichlorid oder n-Butylcyclopentadienylzirkoniumtrichlorid.

Eine bevorzugte Verbindung IVa ist Tetrabenzyltitan.

Das erfindungsgemäße Verfahren zur Herstellung geträgerter Katalysatoren weist zahlreiche Vorteile auf. Zunächst kann durch die Löslichkeit des Copolymerisats, wie es durch Verfahrensschritt 1 erhalten wird, in organischen Lösungsmitteln eine homogene Verteilung von Metallocenzentren auf dem Copolymergrundgerüst erhalten werden. Im Verlauf der polymeranalogen Umsetzung kommt es jedoch neben der Modifizierung des Polymergrundgerüstes mit Metallocenzentren auch zu einer Vernetzung der Polymerketten durch eine Diels-Alder-Reaktion der Cyclopentadienylreste. Das vernetzte Polymer ist in organischen Lösungsmitteln überwiegend unlöslich und in dieser Form zum Einsatz in Polymerisationsreaktion in der Gasphase oder in Suspension geeignet. Dieser unlösliche Trägerkatalysator kann nun unter thermischer Belastung, also beispielsweise im Verlauf der Polymerisationsreaktion oder bei anschließenden Aufarbeitungsschritten, etwa bei einer Extrusion, gemäß einer Retro-Diels-Alder-Reaktion wieder zu den löslichen Copolymerketten fragmentieren. Der auf diese Weise fragmentierte Trägerkatalysator kann sich auf diese Weise besonders homogen in dem gebildeten Polymer verteilen.

Wie der nach dem erfindungsgemäßen Verfahren erhältliche geträgerte Metallocenkatalysator ist auch das durch die Verfahrensschritte 1 und 2 erhältliche Copolymerisat bisher nicht bekannt gewesen. Dieses Copolymerisat läßt sich als Trägermaterial für die verschiedensten Metallocenkatalysatoren verwenden.

Die erfindungsgemäßen geträgerten Metallocenkatalysatoren eignen sich beispielsweise zur Polymerisation von Olefinen und insbesondere zur Polymerisation von α-Olefine, d.h. Kohlenwasserstoffen mit endständigen Doppelbindungen. Geeignete Monomere können funktionalisierte olefinisch ungesattigte Verbindungen wie Esteroder Amidderivate der Acryl- oder Methacrylsäure, beispielsweise Acrylate, Methacrylate oder Acrylnitril sein. Bevorzugt sind unpolare olefinische Verbindungen, worunter auch arylsubstituierte α-Olefine fallen. Besonders bevorzugte α-Olefinen sind lineare oder verzweigte C₂-C₁₂-Alk-1-ene, insbesondere lineare C₂-C₁₀-Alk-1-ene wie Ethylen, Propylen, But-1-en, Pent-1-en, Hex-1-en, Hept-1-en, Oct-1-en, Non-1-en, Dec-1-en oder 4-Methyl-pent-1-en oder unsubstituierte oder substituierte vinylaromatische Verbindung der allgemeinen Formel 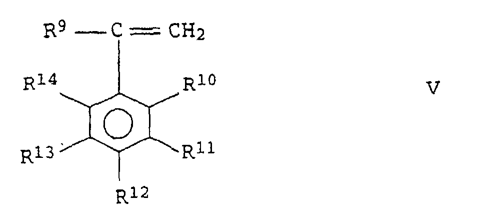 in der die Substituenten folgende Bedeutung haben:
- R⁹: Wasserstoff oder C₁- bis C₄-Alkyl, vorzugsweise Wasserstoff;
- R¹⁰ bis R¹⁴: unabhängig voneinander Wasserstoff, C₁- bis C₁₂-Alkyl, C₆ - bis C₁₈-Aryl oder Halogen oder wobei zwei benachbarte Reste gemeinsam für 4 bis 15 C-Atome aufweisende Gruppen stehen; vorzugsweise Wasserstoff, C₁- bis C₄-Alkyl, Chlor, Phenyl, Biphenyl, Naphthalin oder Anthracen oder wobei zwei benachbarte Reste gemeinsam für 4 bis 12 C Atome aufweisende Gruppen stehen, so daß sich als Verbindungen der allgemeinen Formel V beispielsweise Naphthalinderivate oder Anthracenderivate ergeben.

Beispiele für bevorzugte vinylaromatische Monomere sind Styrol, p-Methylstyrol, p-Chlorstyrol, 2,4-Dimethylstyrol, 4-Vinylbiphenyl, Vinylnaphthalin oder Vinylanthracen.

Es können auch Gemische aus verschiedenen α-Olefinen polymerisiert werden.

Insbesondere lassen sich die erfindungsgemäßen geträgerten Metallocenkatalysatoren in verschiedenen Verfahren zur Polymerisation von Ethylen, Propylen oder Styrol einsetzen. Neben der Homopolymerisation von Ethylen, Propylen oder Styrol sind die erfindungsgemäßen Trägerkatalysatoren insbesondere zur Copolymerisation geeignet, da die Katalysatoren zu einem gleichmäßigen Einbau des Comonomers in das Polymerisat und in der Regel zu engen Molekulargewichtsverteilungen fuhren. Als Comonomere bei der Ethylenpolymerisation werden bevorzugt C₃- bis C₈-α-Olefine, insbesondere Buten, Penten, Hexen und/oder Octen verwendet. Bevorzugte Comonomere bei der Propylenpolymerisation sind Ethylen und/oder Buten.

Das erfindungsgemäße Polymerisationsverfahren wird im allgemeinen bei Temperaturen im Bereich von -50 bis 300°C. vorzugsweise im Bereich von 0 bis 150°C und bei Drücken im Bereich von 0,5 bis 3000 bar, vorzugsweise im Bereich von 1 bis 80 bar, durchgeführt.

Die Polymerisation kann in Lösung, in Suspension, in flüssigen Monomeren oder in der Gasphase durchgeführt werden. Bevorzugt erfolgt die Polymerisation in flüssigen Monomeren, in Suspension oder nach einem Gasphasenverfahren, wobei Verfahren in gerührter Gasphase oder in einer Gasphasenwirbelschicht bevorzugt sind.

### Beispiele

### Beispiel 1

### Herstellung von Styrol-p-Chlormethylstyrol-Copolymeren

46,9 g (0,45 mol) Styrol, 7,63 g (0,05 mol) p-Chlormethylstyrol und 500 mg AIBN wurden in 50 ml absolutem Toluol gelöst und sorgfältig entgast. Nach 12 Stunden bei 70°C wurde mit 100 ml Toluol verdünnt und aus 1,8 1 Methanol ausgefällt. Nach Waschen mit 200 ml Methanol wurde abfiltriert und das Copolymerisat 48 h im Vakuum bei 70°C getrocknet.
- Ausbeute:: 40,8 g (75 % d.Th.)
- ¹H-NMR:: 1,03 - 2,47 m, 4,52 s, 6,17 - 7,56 m
Durch Integration der NMR-Signale wurde der Chlormethylstyrolgehalt im Polymer auf 10,5 mol-% berechnet.

In analoger Weise wurde eine Reihe von Polymeren mit unterschiedlichen Chlormethylstyrolgehalten synthetisiert. Die Ergebnisse können der Tabelle 1 entnommen werden.

**Tabelle 1**

| Beispiel | Einwaage Styrol (mol) | Einwaage p-Chlormethylstyrol (mol) | Ausbeute (g) | % Chlormethylstyrol im Polymer |
|---|---|---|---|---|
| 1.1. | 0,45 | 0,05 | 40,8 (75 % d.Th.) | 10,5 |
| 1.2. | 0,46 | 0,014 | 33,2 (66 % d.Th.) | 2,8 |
| 1.3. | 0,42 | 0,041 | 34,5 (69 % d.Th.) | 9,2 |
| 1.4. | 0,47 | 0,025 | 42,2 (79 % d.Th.) | 5,0 |
| 1.5. | 0,18 | 0,03 | 15,1 (63 % d.Th.) | 15,3 |

### Beispiel 2

### Herstellung der cyclopentadienhaltigen Copolymere:

### Beispiel 2.1.: Polymer mit 10,5 % Cyclopentadien-Gehalt

5 g des Polymeren aus Beispiel 1.1 (10,5 % Chlormethylstyrolgehalt) wurden zusammen mit 2,1 g (92 mmol ≅ 20 eq.) blankem Natriumdraht 4 h im Hochvakuum getrocknet. Anschließend wurden 80 ml THF zugegeben und bei -10°C 3,0 g (46 mmol ≅ 10 eq.) Cyclopentadien zugetropft. Nach 20 h wurde auf 40 ml eingeengt und aus 1.6 1 Methanol bei -10°C gefällt. Nach einer Stunde Rühren und weiteren 4 h bei -10°C wurde das Copolymer abfiltriert und 36 h im Hochvakuum getrocknet (-5°C).
¹H-NMR: 0,56 - 2,51 m, 2,80 s, 2,96 s, 3,26 s, 5,57 - 7,93 m

Soweit aus dem ¹H-NMR erkennbar, hat ein vollständiger Umsatz aller Chlormethylgruppen stattgefunden.

### Beispiel 2.2.: Polymer mit 5 % Cyclopentadien-Gehalt

Analog zu 2.1. wurden 5 g des Polymeren aus Beispiel 1.4. eingesetzt und die Menge von Natrium und Cyclopentadien entsprechend des Chlormethylgehaltes reduziert.

### Beispiel 3

### Herstellung von metallocenhaltigen Polymeren

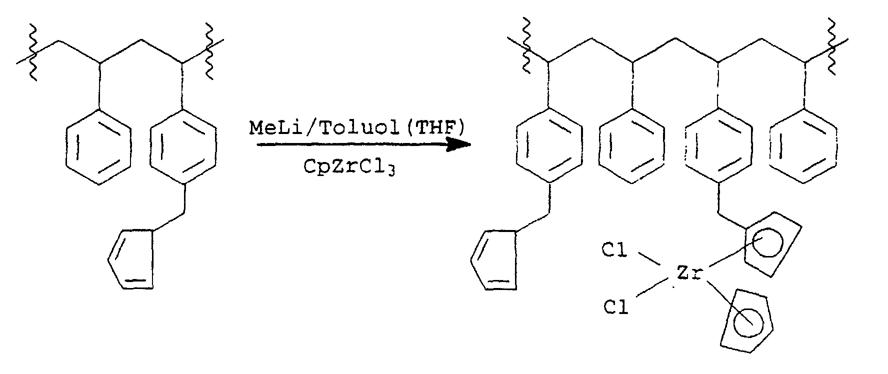

### Beispiel 3.1.

Zu 1 g Polymer aus Beispiel 2.1 gelöst in 30 ml Toluol wurden bei -10°C 6.25 ml (10 mmol=20 eq.) Methyllithium zugetropft. Nach 12 h wurden bei -10°C 130 mg CpZrCl₃ zu der Cp-Polymeranion-Lösung gegeben. Nach 12 h Rühren wurde aus 800 ml trockenem Hexan bei Raumtemperatur gefällt. Nach weiteren 6 h Rühren wurde unter Inertgas abfiltriert und 4 h im Hochvakuum bei Raumtemperatur getrocknet.

Das Produkt zeigte im IR-Spektrum die folgenden Banden:
3081, 3025, 2924, 2850, 1622, 1601, 1583, 1493, 1452, 1000, 852, 758, 698, 465

Es wurden eine Reihe weiterer zirconocenhaltiger Polymere nach dieser Methode synthetisiert.

Die Ergebnisse können Tabelle 2 entnommen werden.

| Beispiel | eingesetztes Polymer aus Beispiel | Cp-Gehalt des Träger-Polymers (µmol/g Polymer) | Zr-Gehalt des Polymers (µmol/g Polymer) |
|---|---|---|---|
| 3.1. | 2.1. | 900 | 100 |
| 3.2. | 2.2. | 500 | 75 |
| 3.3. | 2.3. | 500 | 250 |
| 3.4. | 2.4. | 500 | 500 |

### Polymerisation von Ethylen

### Beispiel 4.1.

In einem gerührten 1-1-Stahlautoklav wurden nach sorgfältigem Spülen mit Stickstoff und Temperieren auf die Polymerisationstemperatur von 70°C 450 ml iso-Butan und 2,5 ml MAO (1,53 molar in Toluol) vorgelegt. Dann wurden 50 mg des Katalysators aus Beispiel 3.2. mit weiteren 20 ml iso-Butan eingespült und Ethylen auf einen Gesamtdruck von 38 bar aufgepreßt. Der Druck im Autoklaven wurde durch Nachdosierung von Ethylen konstant gehalten. Nach 90 Minuten wurde die Polymerisation durch Entspannen des Autoklaven abgebrochen. Das Polymerisat fiel in Form eines rieselfähigen Grießes an.

### Beispiel 4.2.

Die Vorgehensweise von Beispiel 4.1. wurde wiederholt, jedoch wurde der Katalysator mit den 2,5 ml MAO (1,53 M in Toluol) in einem mit Stickstoff gespülten Kolben 30 Minuten voraktiviert und anschließend in den Polymerisationsreaktor mit Isobutan eingespült.

| Beispiel | Ausbeute [g Polymer] | Produktivität [g Polymer/g Katalysator] | η [gemäß ISO 1628-3] [dl/g] |
|---|---|---|---|
| 4.1. | 5.2 | 100 | 7.41 |
| 4.2. | 6.4 | 130 | 7.50 |

### Beispiel 5

### Herstellung eines Styrol-p-Bromstyrol-Copolymeren

18,0 g (0,173) mol Styrol, 3,5 g (0,019 mol) p-Bromstyrol und 40 mg AIBN wurden in 20 ml absolutem Toluol gelöst und sorgfältig entgast. Nach 24 Stunden Rühren bei 70°C wurde mit 50 ml Toluol verdünnt und aus 1 l Methanol ausgefällt. Das Polymer wurde abfiltriert, mit 100 l Methanol gewaschen und 48 Stunden im Vakuum getrocknet.
Ausbeute: 16,4 g (76 % d.Th.)

### Beispiel 6

### Herstellung eines cyclopentadienhaltigen Copolymeren

2,5 g des Copolymeren aus Beispiel 5 wurden in 250 ml THF gelöst. Dazu gab man bei -78°C 1,4 ml einer 1,6 molaren n-Butyllithium-Lösung (Lösung in Hexan) und rührte 0,5 h bei dieser Temperatur. Anschließend wurden 0,234 g (2,2 mmol) Dimethylfulven langsam zugegeben. Nach 0,5 h wurde die Kühlung entfernt und eine weitere Stunde bei Raumtemperatur nachgerührt. Anschließend wurde der Reaktionsansatz auf 40 ml eingeengt und bei -10°C in 1 l Methanol ausgefällt. Nach einer Stunde Rühren und weiteren 4 h bei -10°C wurde das Copolymer abfiltriert und 36 h bei -5°C im Hochvakuum getrocknet.

## Patentansprüche

1. Verfahren zur Herstellung eines geträgerten Katalysators, **dadurch gekennzeichnet, daß** es folgende Verfahrensschritte umfaßt:
(1) Herstellung eines Copolymerisats enthaltend mindestens folgende Monomereinheiten I und II 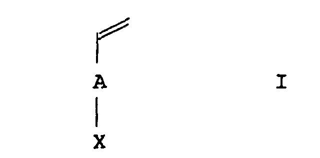 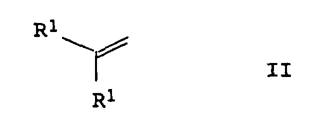 wobei die Variablen die folgende Bedeutung haben:
A eine direkte chemische Bindung oder eine Gruppe 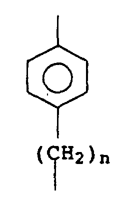
X eine substituierbare Abgangsgruppe,
R¹ gleiche oder verschiedene der folgenden Reste: Wasserstoff, substituiertes oder unsubstituiertes Aryl oder verzweigtes oder unverzweigtes Alkyl oder Alkenyl und
n eine ganze Zahl von 0 bis 8,
(2) polymeranaloge Umsetzung des nach (1) erhaltenen Copolymerisats mit einer Cyclopentadienylverbindung III oder einer Fulvenverbindung IIIa 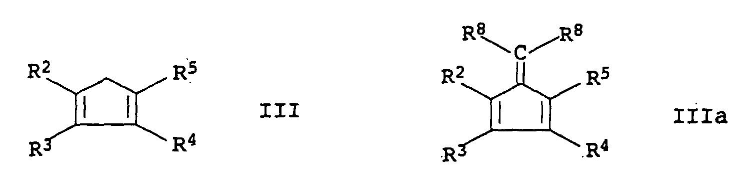 zu einem entsprechenden Copolymerisat, bei welchem mindestens ein Teil der Abgangsgruppen X durch Reste III' oder III'a 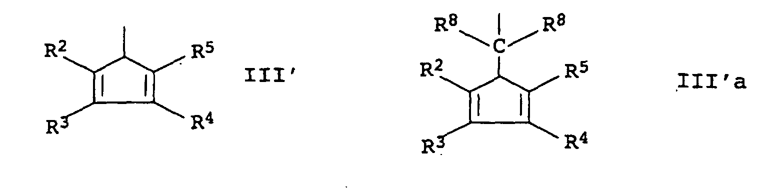 ersetzt sind, wobei die Variablen unabhängig voneinander die folgende Bedeutung haben:
R²,R³,R⁴,R⁵ Wasserstoff, C₁-C₁₀-Alkyl, substituiertes oder unsubstituiertes Phenyl oder einer dieser Reste eine Gruppe
-QR⁶R⁷X², in welcher
Q Kohlenstoff, CR⁶R⁷C, Germanium oder Silicium,
R⁶,R⁷ unabhängig voneinander Wasserstoff, Methyl, Ethyl oder Phenyl,und
X² Halogen, Methyl, Methoxy oder Ethoxy bedeuten; und
R⁸ gleiche oder verschiedene der Reste C₁- bis C₄-Alkyl oder substituiertes oder unsubstituiertes Phenyl sind, und
(3) Umsetzung des nach (2) erhaltenen modifizierten Cöpolymerisats mit einer Verbindung IV oder IVa
CpM(X³)₃ IV
M(X³)₄ IVa
in welcher die Variablen die folgende Bedeutung haben:
Cp ein substituierter oder unsubstituierter Cyclopentadienylrest,
M Ti, Zr oder Hf und
X³ Halogen, Wasserstoff, C₁- bis C₁₀-Alkyl, C₁- bis C₁₀-Alkoxy oder Amido, wobei verschiedene Substituenten X³ unterschiedliche Bedeutung haben können.

2. Verfahren nach Anspruch 1, **dadurch gekennzeichnet, daß** mindestens ein Rest R¹ in Formel II substituiertes oder unsubstituiertes Phenyl, Pyrenyl, Naphthyl oder Alkenyl bedeutet.

3. Verfahren nach Anspruch 1 oder 2, **dadurch gekennzeichnet, daß** als Monomereinheit II Styrol, Butadien oder Isopren eingesetzt wird.

4. Verfahren nach den Ansprüchen 1 bis 3, **dadurch gekennzeichnet, daß** die Variable X in Formel I Halogen, Tosylat, Trifluoracetat, Acetat oder Azid bedeutet.

5. Verfahren nach den Ansprüchen 1 bis 3, **dadurch gekennzeichnet, daß** die Variable X in Formel I Li oder MgX⁴ ist, wobei X⁴ Halogen bedeutet.

6. Verfahren nach Anspruch 5, **dadurch gekennzeichnet, daß** als Fulvenverbindung IIIa Dimethylfulven eingesetzt wird.

7. Verfahren nach den Ansprüchen 1 bis 4, **dadurch gekennzeichnet, daß** als Cyclopentadienylverbindung III unsubstituiertes Cyclopentadien eingesetzt wird.

8. Verfahren nach den Ansprüchen 1 bis 6, **dadurch gekennzeichnet, daß** ein Rest R² bis R⁵ in Verbindung III oder IIIa eine Gruppe -Si(CH₃)₂X² ist.

9. Verfahren nach den Ansprüchen 1 bis 8, **dadurch gekennzeichnet, daß** der Rest Cp in Formel IV Mono- oder Dialkylcyclopentadienyl oder substituiertes oder unsubstituiertes Fluorenyl, Indenyl oder Tetrahydroindenyl bedeutet.

10. Geträgerter Metallocenkatalysator, erhältlich nach den Ansprüchen 1 bis 9.

11. Copolymerisat erhältlich nach den Verfahrensschritten (1) und (2) gemäß Anspruch 1 als Trägermaterial für Metallocenkatalysatoren.

12. Verfahren zur Polymerisation von Olefinen in Gegenwart eines Katalysators gemäß Anspruch 10.

## Claims

1. A process for preparing a supported catalyst, comprising the steps of
(1) preparing a copolymer comprising at least monomer units I and II 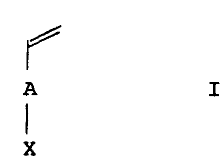 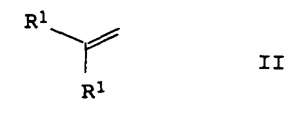 where
A is a direct chemical bond or a group 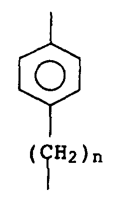
X is a substitutable leaving group,
R¹ is identical or different at each occurrence and is hydrogen, substituted or unsubstituted aryl or branched or unbranched alkyl or alkenyl, and
n is an integer from 1 to 8,
(2) reacting in polymer-analogous manner the copolymer obtained in (1) with a cyclopentadienyl compound III or a fulvene compound IIIa 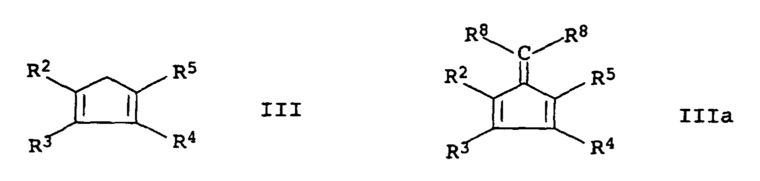 to give a corresponding copolymer in which at least some of the leaving groups X have been replaced by radicals III' or III'a 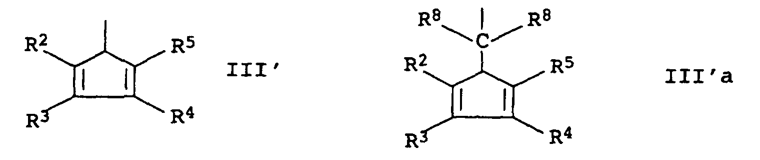 where independently of one another
R²,R³,R⁴ and R⁵ are hydrogen, C₁-C₁₀-alkyl, or substituted or unsubstituted phenyl, or one of them is -QR⁶R⁷X² in which
Q is carbon, CR⁶R⁷C, germanium or silicon,
R⁶ and R⁷ independently of one another are hydrogen, methyl, ethyl or phenyl, and
X² is halogen, methyl, methoxy or ethoxy; and
R⁸ radicals are identical or different C₁- to C₄-alkyl radicals or substituted or unsubstituted phenyl, and
(3) reacting the modified copolymer obtained in (2) with a compound IV or IVa
CpM(X³)₃ IV
M(X³)₄ IVa
where
Cp is a substituted or unsubstituted cyclopentadienyl radical,
M is Ti, Zr or Hf, and
X³ is halogen, hydrogen, C₁-C₁₀-alkyl, C₁-C₁₀-alkoxy or amido, it being possible for different substituents X³ to have different meanings.

2. A process as claimed in claim 1, wherein one or more radicals R¹ in formula II are substituted or unsubstituted phenyl, pyrenyl, naphthyl or alkenyl.

3. A process as claimed in claim 1 or 2, wherein styrene, butadiene or isoprene is employed as monomer unit II.

4. A process as claimed in any of claims 1 to 3, wherein X in formula I is halogen, tosylate, trifluoroacetate, acetate or azide.

5. A process as claimed in any of claims 1 to 3, wherein X in formula I is Li or MgX⁴, where X⁴ is halogen.

6. A process as claimed in claim 5, wherein dimethylfulvene is employed as fulvene compound IIIa.

7. A process as claimed in any of claims 1 to 4, wherein unsubstituted cyclopentadiene is employed as cyclopentadienyl compound III.

8. A process as claimed in any of claims 1 to 6, wherein one of R² to R⁵ in compound III or IIIa is a group -Si(CH₃)₂X².

9. A process as claimed in any of claims 1 to 8, wherein Cp in formula IV is mono- or dialkylcyclopentadienyl or substituted or unsubstituted fluorenyl, indenyl or tetrahydroindenyl.

10. A supported metallocene catalyst obtainable as claimed in any of claims 1 to 9.

11. A copolymer obtainable by steps (1) and (2) of the process as claimed in claim 1, as a support material for metallocene catalysts.

12. A process for polymerizing olefins in the presence of a catalyst as claimed in claim 10.

## Revendications

1. Procédé pour la préparation d'un catalyseur supporté, **caractérisé en ce qu'**il comprend les étapes de procédé suivantes consistant à :
(1) préparer un copolymère contenant au moins les séquences monomères I et II suivantes 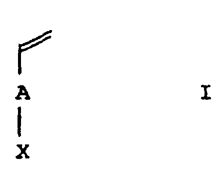 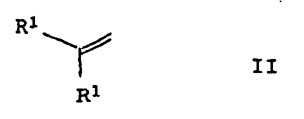 formules dans lesquelles les variables prennent la signification suivante :
A représente une liaison chimique directe ou un groupe 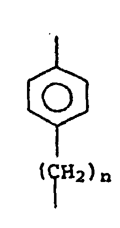
X représente un groupe sortant substituable,
R¹ représente les radicaux, identiques ou différents, suivants : un atome d'hydrogène, un groupe aryle substitué ou non substitué ou un groupe alcényle ou alkyle ramifié ou non ramifié, et
n représente un nombre entier compris entre 0 et 8,
(2) faire réagir le copolymère obtenu dans (1) selon une polymérisation analogue, avec un composé cyclopentadiényle III ou un composé fulvène IIIa 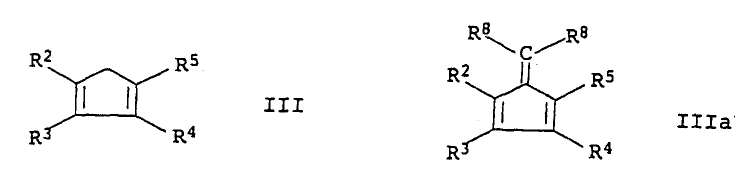 en copolymère correspondant dans lequel les groupes sortants X sont remplacés, au moins partiellement, par un reste III' ou III'a 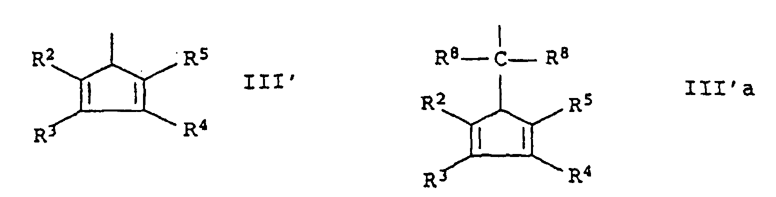 formules dans lesquelles les variables prennent, indépendamment les unes des autres, les significations suivantes :
R², R³, R⁴, R⁵ représentent un atome d'hydrogène, un groupe alkyle en C₁ à C₁₀, phényle substitué ou non substitué, ou bien un de ces radicaux représente un groupe - QR⁶R⁷X², formule dans laquelle
Q représente un atome de carbone, un groupe CR⁶R⁷C, un atome de germanium ou de silicium,
R⁶, R⁷ représentent, indépendamment l'un de l'autre, un atome d'hydrogène, un groupe méthyle, éthyle ou phényle, et
X² représente un atome d'halogène, un groupe méthyle, méthoxy ou éthoxy, et
R⁸ sont identiques ou différents et représentent un reste alkyle en C₁ à C₄ ou un groupe phényle substitué ou non substitué, et
(3) faire réagir le copolymère modifié que l'on a obtenu dans (2), avec un composé IV ou Iva
CpM(X³)₃ IV
M(X³)₄ IVa IVa
formules dans lesquelles les variables prennent la signification suivante :
Cp représente un reste cyclopentadiényle substitué ou non substitué,
M représente un atome de Ti, de Zr ou de Hf, et
X³ représente un atome d'halogène ou d'hydrogène, un groupe alkyle en C₁ à C₁₀, alcoxy en C₁ à C₁₀ ou amino, les substituants X³ prenant chacun éventuellement des significations différentes.

2. Procédé selon la revendication 1, **caractérisé en ce qu'**au moins un reste R¹ dans la formule II représente un groupe pyrényle, naphtyle, alcényle ou phényle substitué ou non substitué.

3. Procédé selon la revendication 1 ou 2, **caractérisé en ce que** l'on met en oeuvre, en tant que séquence monomère II, le styrène, le butadiène ou l'isoprène.

4. Procédé selon les revendications 1 à 3, **caractérisé en ce que** la variable dans la formule I représente un atome d'halogène, le tosylate, le trifluoroacétate, l'acétate ou l'azide.

5. Procédé selon les revendications 1 à 3, **caractérisé en ce que** la variable X dans la formule I représente un atome de Li ou un groupe MgX⁴, formule dans laquelle X⁴ représente un atome d'halogène.

6. Procédé selon la revendication 5, **caractérisé en ce que** l'on met en oeuvre, en tant que composé fulvène IIIa, le diméthylfulvène.

7. Procédé selon les revendications 1 à 4, **caractérisé en ce que** l'on met en oeuvre, en tant que composé cyclopentadiényle III, le cyclopentadiène non substitué.

8. Procédé selon les revendications 1 à 6, **caractérisé en ce qu'**un reste R² à R⁵ du composé III ou IIIa représente un groupe -Si(CH₃)₂X².

9. Procédé selon les revendications 1 à 8, **caractérisé en ce que** le reste Cp dans la formule IV représente un reste mono- ou dialkylcyclopentadiényle ou un reste indényle, tétrahydroindényle ou fluorényle substitué ou non substitué.

10. Catalyseur métallocène supporté que l'on peut obtenir selon les revendications 1 à 9.

11. Copolymère que l'on peut obtenir au moyen des étapes de procédé (1) et (2) selon la revendication 1, en tant que matière de support pour les catalyseurs métallocènes.

12. Procédé pour la polymérisation d'oléfines en présence d'un catalyseur selon la revendication 10.
